(19) Europäisches Patentamt
European Patent Office
Office européen des brevets

(11) **EP 3 281 086 B1**

(12) **EUROPEAN PATENT SPECIFICATION**

(45) Date of publication and mention
of the grant of the patent:
**26.01.2022 Bulletin 2022/04**

(21) Application number: **15888113.6**

(22) Date of filing: **07.04.2015**

(51) International Patent Classification (IPC):
*G06F 3/00* *(2006.01)*

(52) Cooperative Patent Classification (CPC):
**G06F 3/011; G06F 3/012;** G06F 2203/011

(86) International application number:
**PCT/CN2015/075994**

(87) International publication number:
**WO 2016/161556 (13.10.2016 Gazette 2016/41)**

(54) **AVATAR KEYBOARD**

AVATAR-TASTATUR

CLAVIER D'AVATAR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.02.2018 Bulletin 2018/07**

(73) Proprietor: **INTEL Corporation
Santa Clara, CA 95054 (US)**

(72) Inventors:
• **ZENG, Fucen
Beijing 100080 (CN)**
• **LI, Wenlong
Beijing 102218 (CN)**

• **LORENZO, Jose Elmer S.
Santa Clara, CA 95051 (US)**

(74) Representative: **Rummler, Felix et al
Maucher Jenkins
26 Caxton Street
London SW1H 0RJ (GB)**

(56) References cited:
WO-A1-2014/146258    WO-A1-2014/178044
CN-A- 103 677 632    CN-A- 103 886 632
CN-A- 104 170 358    US-A1- 2008 158 230
US-A1- 2014 082 520    US-A1- 2014 143 693
US-A1- 2015 035 825

## Description

## Technical Field

The present disclosure relates lo the fields of data processing and data communication. More particularly, the present disclosure relates to the provision of an avatar keyboard.

## Background

The background description provided herein is for the purpose of generally presenting the context of the disclosure. Unless otherwise indicated herein, the materials described in this section are not prior art to the claims in this application and are not admitted to be prior art by inclusion in this section.

A number of smartphones, such as iPhone from Apple® Computer of Cupertino, support multiple soft keyboards (hereinafter, simply keyboards), including keyboards that provide for easy input of emoticons and stickers. However, typically, there are finite number of emoticons and stickers, and they are static and cannot be modified, limiting the users' ability to express themselves, and show their personalities.

WO 2014/178044 A1 discusses providing personal emoticons, which comprise:

a) providing at least one self-portrait image that represent a face expression of a user or a person, either by capturing a new self-portrait image/s or by selecting an existing image file/s; b) processing said provided image/s by applying one or more image processing filters to said image for enchanting said provided image/s and/or for emphasizing the expression represented by the provided face/s; c) converting said processed image/s into an emoticon standardized form, wherein, for example, the converted image(s) can be implemented in any displayable form on a user computer based device.

US 2008/158230 A1 discusses determining an image of a user, detecting facial feature information for a facial region is then in the image. For example, a number of points around the face for a user are determined. The facial region is then normalized based on the content and the facial feature information. The normalized facial region is then animated into a series of animated facial images. These series of animated facial images may be automatically inserted in the content.

US2015/035825 A1 discusses tracking 3D locations of face feature points in real time by adopting a single video camera, and parameterizes head poses and facial expressions according to the 3D locations, and mapping these parameters into an avatar to drive face animation of an animation character.

US 2016/259548 A1 discusses a mobile terminal displaying a virtual keyboard obtaining a direction in which a mobile terminal is inclined and displaying a modified virtual keyboard in correspondence to the obtained inclination direction. The virtual keyboard comprising a plurality of virtual keyboard regions, the mobile terminal displaying the virtual keyboard in which at least one of the plurality of virtual keyboard regions is enlarged and other non-enlarged virtual keyboard regions are reduced based on the obtained inclination direction.

US 2014/082520 A1 discusses an enhanced system of messaging that combines text and multimedia (audio, images and video) with a gesture-driven, animated interface especially suited for the newest generation of touch-sensitive mobile device screens and, wherein the gesture-driven interface can include "hands-free" spatial-gesture-recognizing-devices which can read and interpret physical hand and body gestures made in the environment adjacent to the device without actual physical contact.

## Summary

The invention is defined in the claims. In the following description, any embodiment referred to and not falling within the scope of the claims is merely an example useful to the understanding of the invention.

## Brief Description of the Drawings

Embodiments of the avatar keyboard of the present disclosure will be readily understood by the following detailed description in conjunction with the accompanying drawings. To facilitate this description, like reference numerals designate like structural elements. Embodiments are illustrated by way of example, and not by way of limitation, in the figures of the accompanying drawings.

Figure 1 illustrates a block diagram of a computing/communication device incorporated with the avatar keyboard of the present disclosure, according with various embodiments.
Figure 2 illustrates example additional keyboards supported by the computing/communication device, according to various embodiments Figures 3-5 illustrates example usage of the avatar keyboard of the present disclosure, according to various embodiments.
Figures 6-7 are flow diagrams illustrating example operational flows of the keyboard module of Figure 1, according to various embodiments.
Figures 8-9 are block diagrams further illustrating the avatar animation engine of Figure 1, according to various embodiments.
Figure 10 illustrates an example computer system suitable for use to practice various aspects of the present disclosure, according to the disclosed embodiments.
Figure 11 illustrates a storage medium having instructions for practicing methods described with references to Figures 1-9, according to disclosed embodiments.

## Detailed Description

Apparatuses, methods and storage medium associated with the provision of an avatar keyboard to a communication/computing device are disclosed herein. In embodiments, an apparatus for communicating according to Claim 1 comprises one or more processors to execute an application ; an avatar engine; and a keyboard module coupled with the one or more processor to provide a plurality of keyboards in a corresponding plurality of keyboard modes for inputting to the application, including an avatar keyboard, in an avatar keyboard mode. The avatar keyboard includes a plurality of avatar keys with corresponding avatars that can be dynamically customized or animated based at least in part on facial expressions or head poses of a user, prior to input to the application. In particular, the avatars can be dynamically customized or animated, based at least in part on facial expressions and/or head poses of a user, thereby enabling the user to be better able to express himself/herself.

In embodiments, the application may be a communication application, such as a chat application, a messaging application, an email application, or a social networking application.

In the following detailed description, reference is made to the accompanying drawings which form a part hereof wherein like numerals designate like parts throughout, and in which is shown by way of illustration embodiments that may be practiced. It is to be understood that other embodiments may be utilized and structural or logical changes may be made without departing from the scope of the present disclosure. Therefore, the following detailed description is not to be taken in a limiting sense, and the scope of embodiments is defined by the appended claims.

Aspects of the disclosure are disclosed in the accompanying description. Alternate embodiments of the present disclosure may be devised without parting from the scope of the present disclosure. It should be noted that like elements disclosed below are indicated by like reference numbers in the drawings. The scope of the invention is defined by the appended claims.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiment. Various additional operations may be performed and/or described operations may be omitted in additional embodiments.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A. B and C).

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

As used herein, the term "module" may refer to, be part of, or include an Application Specific Integrated Circuit (ASIC), an electronic circuit, a processor (shared, dedicated, or group) and/or memory (shared, dedicated, or group) that execute one or more software or firmware programs, a combinational logic circuit, and/or other suitable components that provide the described functionality.

As used herein, the term "communication devices" includes computing devices with communication applications. The term "keyboard," unless the context clearly indicates otherwise, refers to a soft keyboard. The term "keys," similarly, unless the context clearly indicates otherwise, refers to a soft key.

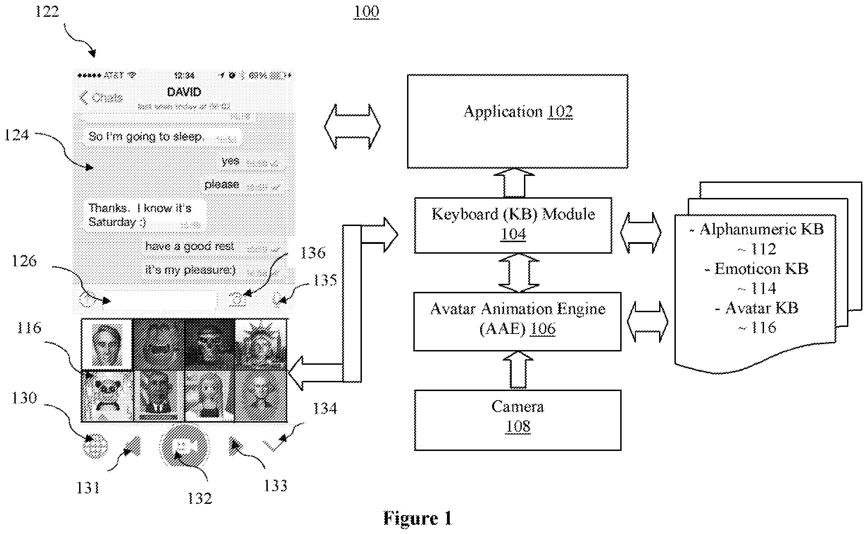

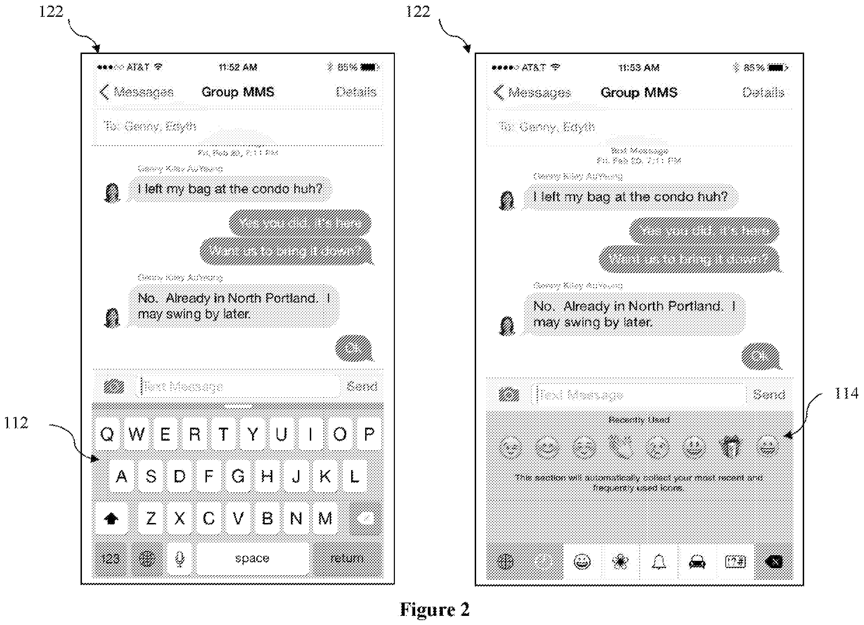

Referring now to Figure 1, wherein a block diagram of a computing/communication device incorporated with the avatar keyboard of the present disclosure, according with various embodiments, is shown. As illustrated, computing/communication device 100 (hereinafter, simply communication device) may include application 102, e.g., a communication application, such as, but is not limited to, a chat application, a messaging application, an email application, a social networking application, and so forth. Communication device 100 may further include keyboard (KB) module 104 to provide a plurality of keyboards 112-116 for use to provide inputs to application 102. The plurality of keyboards 112-116 may include, but are not limited to, an alphanumeric KB 112 (see also Figure 2), an emoticon KB 114 (see also Figure 2), and an avatar KB 116. Avatar KB 116 may include a plurality of avatar keys corresponding to a plurality of avatars. Further, communication device 100 may include avatar animation engine (AEE) 106 and camera 108, operatively coupled and cooperate with KB module 104 to allow KB module 104 to support customization and/or animation of the avatars corresponding to the avatar keys, to be described more fully below. In embodiments, KB module 104 may be implemented in hardware, such as Application Specific Integrated Circuit (ASIC), programmable logic programmed with the operational logic described herein, or software operated by a host processor of communication device 100, or combination thereof.

Illustrated also in Figure 1 is an example display surface instance 122 of an example chat application 102. As shown, an instance of display surface 122 may include a dialogue area showing the most recent communication exchanges between a user of communication device 100, and one or more other users of the chat session.

An instance of display surface 122 may also include input area 126 showing text, emoticons, stickers, and/or avatars inputted, prior to sending. An instance of display surface 122 may also include a current KB, such as the avatar KB 116 shown, having a number of avatar keys. Similar to other KBs, an avatar may be selected for input through tapping of the corresponding avatar key. In embodiments, an avatar may be selected for input through tapping of a control key/icon, e.g., control key/icon 132; or other means.

Further, in addition to control key/icon 132, an instance of display surface 122 may also include a number of other control icons, such as, but are not limited to, control icon 130 for switching to the other KBs, control icons 131 and 133 to scroll through and show other avatar keys, control icon 134 to display additional control icons, control icon 135 to open a microphone (not shown) of communication device 100 to provide audio input, or control icon 136 to open camera 108 to take a picture.

In embodiments, control icon 132 may also be used to enter a customization/animation mode to customize or animate a selected avatar, e.g., via tapping and momentarily holding the control icon. In alternate embodiments, the customization/animation mode may also be entered by e.g., tapping and momentarily holding an avatar; or other means.

In embodiments, KB module 104 may be implemented in hardware, software, or combination thereof. Examples of hardware implementation may include, but are not limited to, application specific integrated circuit (ASIC) or programmable circuit, such Field Programmable Gate Arrays (FPGA) programmed with the operating logic described herein. Examples of software implementation may include assembler or high level language implementations compiled into machine instructions supported by the host processor (not shown) of communication device 100.

In embodiments, while not illustrated, for ease of understanding, communication device 100 may also include other components, such as, but are not limited to, processors (single or multi-cores), memory (volatile or non-nonvolatile), operating system, graphics co-processors, digital signal processors, communication interfaces (wired or wireless), and so forth. Examples of wireless communication interfaces may include, but are not limited, Bluetooth®, WiFi, LTE, and so forth. According, except for the avatar KB technology incorporated therein, communication device 100 may otherwise be any one of a number of computing/communication devices known in the art, including, but are not limited, smartphones, computing tablets, ultrabooks, game consoles, set-top boxes, smart TVs, and so forth.

As alluded to earlier, Figure 2 illustrates example additional keyboards supported by computing/communication device 100, according to various embodiments. In particular, the left side of Figure 2 illustrates alphanumeric KB 112, while the right side of Figure 2 illustrates emoticon KB 114, each of which may be invoked in a response to a request for the KB, e.g., through tapping of control icon 130 of Figure 1.

While for ease of understanding, KB module 104 is being described with support for three KBs 112-116, the present disclosure is not so limited. In embodiments, KB module 104 may support less or more KBs, e.g., including KB of other Latin languages, French, Portuguese ..., or other non-Latin languages, such as Arabic, Farsi, Japanese, Simplified/Traditional Chinese, and so forth.

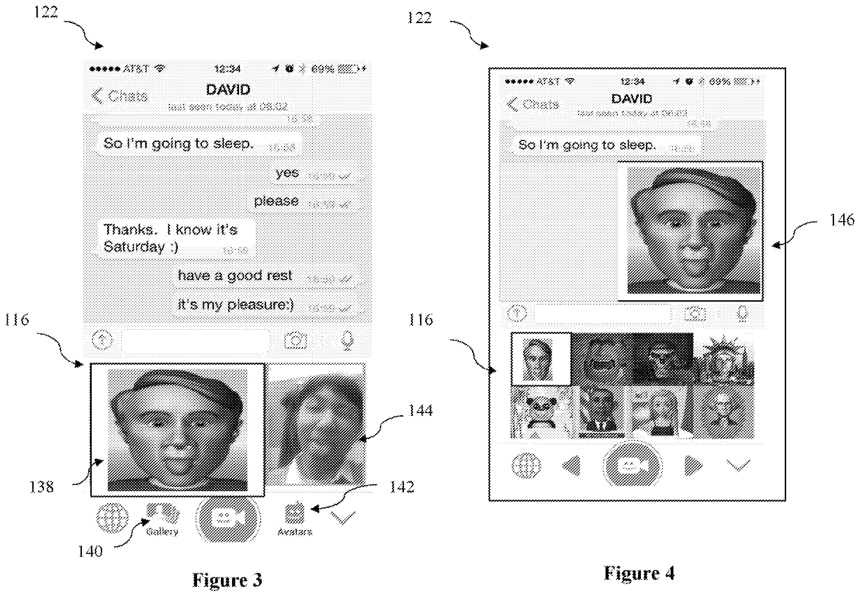

Referring now to Figures 3-5, wherein example usages of avatar KB 116 of the present disclosure, according to various embodiments, are illustrated. As shown in Figure 3, on entry into the customization/animation mode, the selected avatar 138 is shown in one area of avatar KB 116, while a current view 144 of the camera is shown in another area of avatar KB 116. As will be described more fully below, while in customization/animation mode, KB module 104 may use AAE 106 to analyze one or more images captured by camera 108 for facial expressions and/or head poses of the user, and customize/animate the selected avatar 138, based at least in part on a result of the analysis of the facial expressions and/or head poses of the user. In embodiments, a control icon 142 may be provided to start and stop the customization/animation of the selected avatar 138. Further, in embodiments, a control icon 140 may be provided for the user to step through the avatar gallery to select another avatar for customization/animation instead.

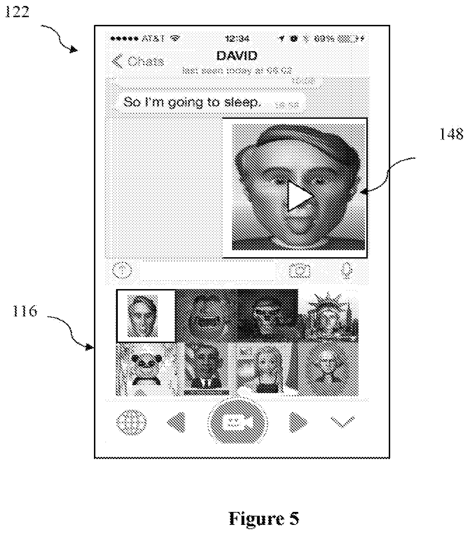

Figure 4 illustrates an example instance of display surface 122 of application 102 after a customized avatar (involving a single image frame) has been inputted to, and sent by application 102. Figure 5 illustrates an example instance of display surface 122 of application 102 after an animated avatar (involving multiple image frames) has been inputted to, and sent by application 102.

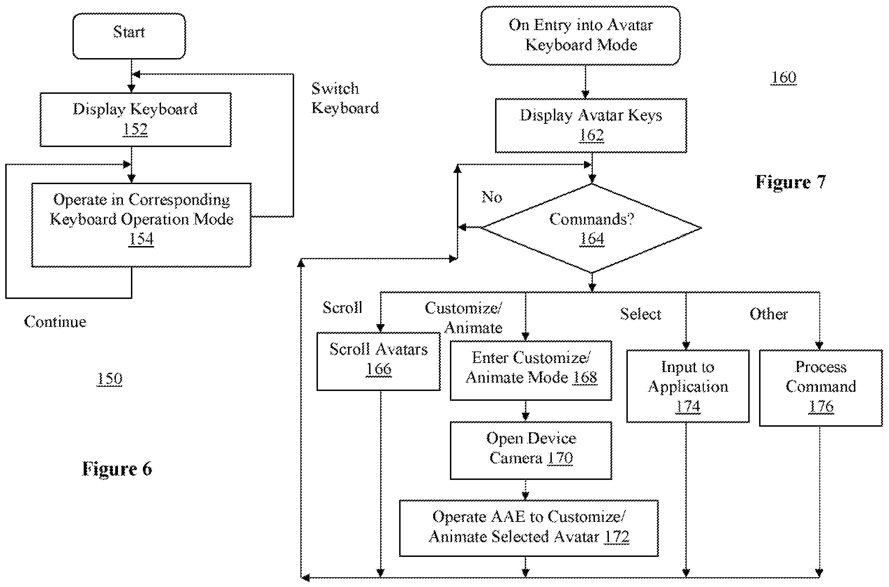

Referring now to Figures 6-7, wherein two flow diagrams illustrating example operational flows of KB module 104, according to various embodiments, are shown. Process 150 for providing various KBs, including the earlier described alphanumeric KB 112, emoticon KB 114 and avatar KB 116, may include operations in block 152-154. Process 160 for providing avatar KB 116 may include operations in block 162-176. These operations may be performed e.g., by KB module 104 of Figure 1.

As shown, process 150 may start at block 152. At block 152, a current KB, e.g., either alphanumeric KB 112, emoticon KB 114 or avatar KB 116, may be displayed. Next, at block 154, the displayed KB may be operated in a corresponding KB mode, e.g., an alphanumeric KB mode, an emoticon KB mode, and an avatar KB mode. Operations within the alphanumeric KB mode and the emoticon KB mode are known in the art, and will not be further described. Example operations within the avatar KB mode will be further described below with references to Figure 7.

Process 150 may remain at block 154 until a request to switch the current KB is received. On receipt of a switch request, process 150 may return to block 152, switch the current KB to a next KB, and continue therefrom, as earlier described. In embodiments, the KB may be switched in a round robin manner.

Process 160 for operating an avatar KB may start at block 162, on entry into the avatar KB mode. At block 162, a set of avatar keys may be displayed. Next at block 164, process 160 may await for user selections and/or commands. From block 164, process 160 may proceed to block 166, 168, 174 or 176. Process 160 may proceed to block 166 on receipt of a scroll command. In response to the scroll command, another set of avatar keys may be displayed. On scrolling, process 160 may return to block 164 and proceed therefrom as earlier described.

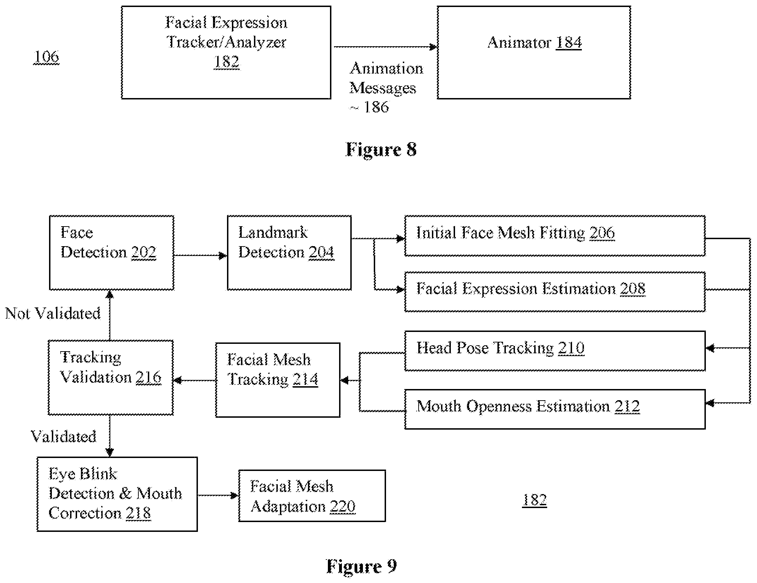

Process 160 may proceed to block 168 on receipt of a customization/animation command. At block 168, process 160 may enter the customization/animation mode, as earlier described. Next at block 170, the device camera may be activated or open. At 172, the AAE may be operated to customize or animate the selected avatar. On completion of customization/animation, process 160 may return to block 164 and proceed therefrom as earlier described. Animation of an avatar, and AAE will be further described below with references to Figures 8-9.

Process 160 may proceed to block 174 on receipt of a select command, e.g., tapping of an avatar key, to select an avatar for input to the application. In response, the application may be notified of the selection, and inputted with the selected avatar (which may be customized or animated). On inputting, process 160 may return to block 164 and proceed therefrom as earlier described.

Process 160 may proceed to block 176 on receipt of other commands. In response, the other commands may be processed in an application dependent manner, which may vary from one command to another, and from one embodiments to another. On completion of processing another command, process 160 may return to block 164 and proceed therefrom as earlier described.

Referring now to Figures 8-9, wherein two block diagrams further illustrating the avatar animation engine of Figure 1, according to various embodiments, are shown. As illustrated, AAE 106 may include facial expression tracker/analyzer 182, and animator 104, coupled with each other as shown. In embodiments, facial expression tracker/analyzer 182 may be configured to access a plurality of image frames 118, e.g., image frames captured by camera 108, and analyze the image frames for facial expressions and/or head poses. Further, facial expression tracker/analyzer 182 may be configured to output, on analysis, a plurality animation messages for animator 184 to drive animation of an avatar, based one either the determined facial expressions and/or head poses.

In embodiments, for efficiency of operation, animator 184 may be configured to animate an avatar with a plurality of pre-defined blend shapes, making AAE 106 particularly suitable for a wide range of mobile devices. A model with neutral expression and some typical expressions, such as mouth open, mouth smile, brow-up, and brow-down, blink, etc., may be first pre-constructed, in advance. The blend shapes may be decided or selected for various facial expression tracker/analyzer 182 capabilities and target mobile device system requirements. During operation, facial expression tracker/analyzer 182 may select various blend shapes, and assign the blend shape weights, based on the facial expression and/or speech determined. The selected blend shapes and their assigned weights may be output as part of animation messages 186.

On receipt of the blend shape selection, and the blend shape weights ($\alpha_i$), animator 184 may generate the expressed facial results with the following formula (Eq. 1):

$$B^* = B_0 + \sum_i \alpha_i \cdot \Delta B_i$$

where $B^*$ is the target expressed facial,

B$_0$ is the base model with neutral expression, and $\Delta B_i$ is $i^{th}$ blend shape that stores the vertex position offset based on base model for specific expression.

More specifically, in embodiments, facial expression tracker/analyzer 182 may be configured with a facial expression tracking function, and an animation message generation function. In embodiments, the facial expression tracking function may be configured to detect facial action movements of a face of a user and/or head pose gestures of a head of the user, within the plurality of image frames, and output a plurality of facial parameters that depict the determined facial expressions and/or head poses, in real time. For examples, the plurality of facial motion parameters may depict facial action movements detected, such as, eye and/or mouth movements, and/or head pose gesture parameters that depict head pose gestures detected, such as head rotation, movement, and/or coming closer or farther from the camera.

In embodiments, facial action movements and head pose gestures may be detected, e.g., through inter-frame differences for a mouth and an eye on the face, and the head, based on pixel sampling of the image frames. Various ones of the function blocks may be configured to calculate rotation angles of the user's head, including pitch, yaw and/or roll, and translation distance along horizontal, vertical direction, and coming closer or going farther from the camera, eventually output as part of the head pose gesture parameters. The calculation may be based on a subset of sub-sampled pixels of the plurality of image frames, applying, e.g., dynamic template matching, re-registration, and so forth. These functions may be sufficiently accurate, yet scalable in their processing power required, making AAE 106 particularly suitable to be hosted by a wide range of mobile computing devices, such as smartphones and/or computing tablets.

An example facial expression tracking function will be further described later with references to Figure 9.

In embodiments, the animation message generation function may be configured to selectively output animation messages 120 to drive animation of an avatar, based on the facial expression and head pose parameters depicting facial expressions and head poses of the user. In embodiments, the animation message generation function may be configured to convert facial action units into blend-shapes and their assigned weights for animation of an avatar. Since face tracking may use different mesh geometry and animation structure with avatar rendering side, the animation message generation function may also be configured to perform animation coefficient conversion and face model retargeting. In embodiments, the animation message generation function may output the blend shapes and their weights as animation messages 1186. Animation message 186 may specify a number of animations, such as "lower lip down" (LLIPD), "both lips widen" (BLIPW), "both lips up" (BLIPU), "nose wrinkle" (NOSEW), "eyebrow down" (BROWD), and so forth.

Still referring to Figure 8, animator 184 may be configured to receive animation messages 186 outputted by facial expression tracker/analyzer 182, and drive an avatar model to animate the avatar, to replicate facial expressions and/or head pose of the user on the avatar.

In embodiments, animator 184, when animating based on animation messages 120 generated in view of facial expression and head pose parameters that factor in head rotation impact, may animate the avatar in accordance with head rotation impact weights, provided by a head rotation impact weights generator (not shown). The head rotation impact weight generator may be configured to pre-generate a set of head rotation impact weights for animator 184. In these embodiments, animator 184 may be configured to animate an avatar through facial and skeleton animations and application of the head rotation impact weights. The head rotation impact weights, as described earlier, may be pre-generated by a head rotation impact weight generator, and provided to animator 104, in e.g., the form of a head rotation impact weight map.

Facial expression tracker/analyzer 182 and animator 184 may each be implemented in hardware, e.g., ASIC, or programmable devices, such as FPGA, programmed with the appropriate logic, software to be executed by general and/or graphics processors. or a combination of both.

Compared with other facial animation techniques, such as motion transferring and mesh deformation, using blend shape for facial animation may have several advantages: 1) Expressions customization: expressions may be customized according to the concept and characteristics of the avatar, when the avatar models are created. The avatar models may be made more funny and attractive to users. 2) Low computation cost: the computation may be configured to be proportional to the model size, and made more suitable for parallel processing. 3) Good scalability: addition of more expressions into the framework may be made easier. It will be apparent to those skilled in the art that these features, individually and in combination, AAE 106 is particularly suitable to be hosted by a wide range of mobile computing devices. However, while AAE 106 is designed to be particularly suitable to be operated on a mobile device, such as a smartphone, a phablet, a computing tablet, a laptop computer, or an e-reader, the present disclosure is not to be so limited. It is anticipated that KB module 104 and AAE 106 may also be operated on computing devices with more computing power than the typical mobile devices, such as a desktop computer, a game console, a set-top box, or a computer server.

Referring now to Figure 9, wherein an example implementation of the facial expression tracking function of Figure 8 is illustrated in further detail, according to various embodiments. As shown, in embodiments, the facial expression tracking function may include face detection function block 202, landmark detection function block 204, initial face mesh fitting function block 206, facial expression estimation function block 208, head pose tracking function block 210, mouth openness estimation function block 212, facial mesh tracking function block 214, tracking validation function block 216, eye blink detection and mouth correction function block 218, and facial mesh adaptation block 220 coupled with each other as shown.

In embodiments, face detection function block 202 may be configured to detect the face through window scan of one or more of the plurality of image frames received. At each window position, modified census transform (MCT) features may be extracted, and a cascade classifier may be applied to look for the face. Landmark detection function block 204 may be configured to detect landmark points on the face, e.g., eye centers, nose-tip, mouth corners, and face contour points. Given a face rectangle, an initial landmark position may be given according to mean face shape. Thereafter, the exact landmark positions may be found iteratively through an explicit shape regression (ESR) method.

In embodiments, initial face mesh fitting function block 206 may be configured to initialize a 3D pose of a face mesh based at least in part on a plurality of landmark points detected on the face. A Candide3 wireframe head model may be used. The rotation angles, translation vector and scaling factor of the head model may be estimated using the POSIT algorithm. Resultantly, the projection of the 3D mesh on the image plane may match with the 2D landmarks. Facial expression estimation function block 208 may be configured to initialize a plurality of facial motion parameters based at least in part on a plurality of landmark points detected on the face. The Candide3 head model may be controlled by facial action parameters (FAU), such as mouth width, mouth height, nose wrinkle, eye opening. These FAU parameters may be estimated through least square fitting.

Head pose tracking function block 210 may be configured to calculate rotation angles of the user's head, including pitch, yaw and/or roll, and translation distance along horizontal, vertical direction, and coming closer or going farther from the camera. The calculation may be based on a subset of sub-sampled pixels of the plurality of image frames, applying dynamic template matching and re-registration. Mouth openness estimation function block 212 may be configured to calculate opening distance of an upper lip and a lower lip of the mouth. The correlation of mouth geometry (opening/closing) and appearance may be trained using a sample database. Further, the mouth opening distance may be estimated based on a subset of sub-sampled pixels of a current image frame of the plurality of image frames, applying FERN regression.

Facial mesh tracking function block 214 may be configured to adjust position, orientation or deformation of a face mesh to maintain continuing coverage of the face and reflection of facial movement by the face mesh, based on a subset of sub-sampled pixels of the plurality of image frames. The adjustment may be performed through image alignment of successive image frames, subject to pre-defined FAU parameters in Candide3 model. The results of head pose tracking function block 210 and mouth openness may serve as soft-constraints to parameter optimization. Tracking validation function block 216 may be configured to monitor face mesh tracking status, to determine whether it is necessary to re-locate the face. Tracking validation function block 216 may apply one or more face region or eye region classifiers to make the determination. If the tracking is running smoothly, operation may continue with next frame tracking, otherwise, operation may return to face detection function block 202, to have the face re-located for the current frame.

Eye blink detection and mouth correction function block 218 may be configured to detect eye blinking status and mouth shape. Eye blinking may be detected through optical flow analysis, whereas mouth shape/movement may be estimated through detection of inter-frame histogram differences for the mouth. As refinement of whole face mesh tracking, eye blink detection and mouth correction function block 216 may yield more accurate eye-blinking estimation, and enhance mouth movement sensitivity.

Face mesh adaptation function block 220 may be configured to reconstruct a face mesh according to derived facial action units, and re-sample of a current image frame under the face mesh to set up processing of a next image frame.

As described, the architecture, distribution of workloads among the functional blocks render facial expression tracking function 122 particularly suitable for a portable device with relatively more limited computing resources, as compared to a laptop or a desktop computer, or a server. In alternate embodiments, the facial expression tracking function may be any one of a number of other face trackers known in the art.

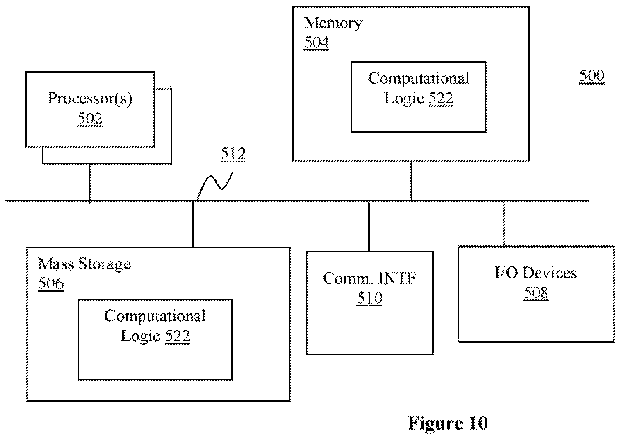

Figure 10 illustrates an example computer system that may be suitable for use as a client device or a server to practice selected aspects of the present disclosure. As shown, computer 500 may include one or more processors or processor cores 502, and system memory 504. For the purpose of this application, including the claims, the term "processor" refers to a physical processor, and the terms "processor" and "processor cores" may be considered synonymous, unless the context clearly requires otherwise. Additionally, computer 500 may include mass storage devices 506 (such as diskette, hard drive, compact disc read only memory (CD-ROM) and so forth), input/output devices 508 (such as display, keyboard, cursor control and so forth) and communication interfaces 510 (such as network interface cards, modems and so forth). The elements may be coupled to each other via system bus 512, which may represent one or more buses. In the case of multiple buses, they may be bridged by one or more bus bridges (not shown).

Each of these elements may perform its conventional functions known in the art. In particular, system memory 504 and mass storage devices 506 may be employed to store a working copy and a permanent copy of the programming instructions implementing the operations associated with KB module 104 and/or AAE 106, earlier described, collectively referred to as computational logic 522. The various elements may be implemented by assembler instructions supported by processor(s) 502 or high-level languages, such as, for example, C, that can be compiled into such instructions.

The number, capability and/or capacity of these elements 510 - 512 may vary, depending on whether computer 500 is used as a client device or a server. When use as client device, the capability and/or capacity of these elements 510 - 512 may vary, depending on whether the client device is a stationary or mobile device, like a smartphone, computing tablet, ultrabook or laptop computer. Otherwise, the constitutions of elements 510-512 are known, and accordingly will not be further described.

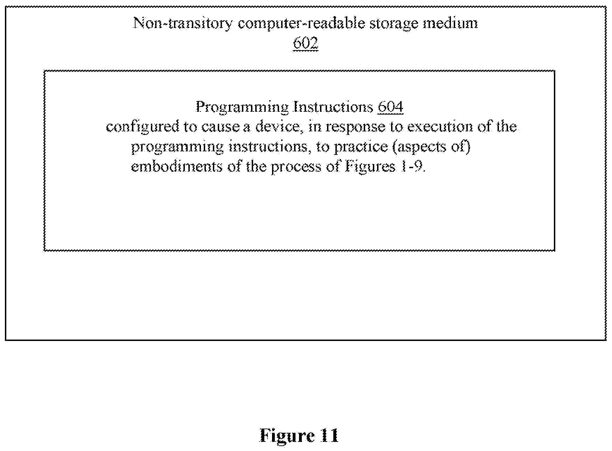

As will be appreciated by one skilled in the art, the present disclosure may be embodied as methods or computer program products. Accordingly, the present disclosure, in addition to being embodied in hardware as earlier described, may take the form of an entirely software embodiment (including firmware, resident software, micro-code, etc.) or an embodiment combining software and hardware aspects that may all generally be referred to as a "circuit," "module" or "system." Furthermore, the present disclosure may take the form of a computer program product embodied in any tangible or non-transitory medium of expression having computer-usable program code embodied in the medium. Figure 11 illustrates an example computer-readable non-transitory storage medium that may be suitable for use to store instructions that cause an apparatus, in response to execution of the instructions by the apparatus, to practice selected aspects of the present disclosure. As shown, non-transitory computer-readable storage medium 602 may include a number of programming instructions 604. Programming instructions 604 may be configured to enable a device, e.g., computer 500, in response to execution of the programming instructions, to perform, e.g., various operations associated with KB module 104 and/or AAE 106, described with references to Figures 1-9. In alternate embodiments, programming instructions 604 may be disposed on multiple computer-readable non-transitory storage media 602 instead. In alternate embodiments, programming instructions 604 may be disposed on computer-readable transitory storage media 602, such as, signals.

Any combination of one or more computer usable or computer readable media may be utilized. The computer-usable or computer-readable medium/media may be, for example but not limited to, an electronic, magnetic, optical, electromagnetic, infrared, or semiconductor system, apparatus, device, or propagation medium. More specific examples (a non- exhaustive list) of the computer-readable medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. Note that the computer- usable or computer-readable medium/media could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer- usable medium may include a propagated data signal with the computer-usable program code embodied therewith, either in baseband or as part of a carrier wave. The computer usable program code may be transmitted using any appropriate medium, including but not limited to wireless, wireline, optical fiber cable, RF, etc.

Computer program code for carrying out operations of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a standalone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The present disclosure is described with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The terminology used herein is for the purpose of describing particular embodiments only and is not intended to be limiting of the disclosure. As used herein, the singular forms "a," "an" and "the" are intended to include plural forms as well, unless the context clearly indicates otherwise. It will be further understood that the terms "comprises" and/or "comprising," when used in this specification, specific the presence of stated features, integers, steps, operations, elements, and/or components, but do not preclude the presence or addition of one or more other features, integers, steps, operation, elements, components, and/or groups thereof.

Embodiments may be implemented as a computer process, a computing system or as an article of manufacture such as a computer program product of computer readable media. The computer program product may be a computer storage medium readable by a computer system and encoding a computer program instructions for executing a computer process.

The description of the present disclosure has been presented for purposes of illustration and description, but is not intended to be exhaustive or limited to the disclosure in the form disclosed. Many modifications and variations will be apparent to those of ordinary skill without departing from the scope of the disclosure. The embodiment was chosen and described in order to best explain the principles of the disclosure and the practical application, and to enable others of ordinary skill in the art to understand the disclosure for embodiments with various modifications as are suited to the particular use contemplated. The scope of the invention is defined by the appended claims.

Referring back to Figure 5, for one embodiment, at least one of processors 502 may be packaged together with memory having computational logic 522 (in lieu of storing on memory 504 and storage 506). For one embodiment, at least one of processors 502 may be packaged together with memory having computational logic 522 to form a System in Package (SiP). For one embodiment, at least one of processors 502 may be integrated on the same die with memory having computational logic 522. For one embodiment, at least one of processors 502 may be packaged together with memory having computational logic 522 to form a System on Chip (SoC). For at least one embodiment, the SoC may be utilized in, e.g., but not limited to, a smartphone or computing tablet,

It will be apparent to those skilled in the art that various modifications and variations can be made in the disclosed embodiments of the disclosed device and associated methods without departing from the scope of the disclosure. The scope of the invention is defined by the appended claims.

**Claims**

1. An apparatus for communicating (100), comprising:

   one or more processors to execute an application (102);
   an avatar animation engine (106); and
   a keyboard module (104) coupled with the one or more processors to provide a plurality of keyboards (112-116) in a corresponding plurality of keyboard modes for inputting to the application, including provision of:

      a software alphanumeric keyboard (112), in an alphanumeric keyboard mode, having a plurality of alphanumeric keys to facilitate selective input of alphanumeric characters corresponding to alphanumeric keys, to the application;
      a software emoticon keyboard (114), in an emoticon keyboard mode, having a plurality of emoticon keys to facilitate selective input of emoticons that are static images, corresponding to the emoticon keys, to the application; and
      a software avatar keyboard (116), in an avatar keyboard mode, having a plurality of software avatar keys to facilitate selective input of dynamic animations of a plurality of avatars corresponding to the software avatar keys, to the application, wherein:

         the keyboard module is further to enter (168) a customize/animate mode within the avatar keyboard mode, and open (170) a camera (108) to capture one or more images of a user of the apparatus; and
         the keyboard module is to further provide (172), or cause to be provided, the one or more images to the avatar animation engine (106) to analyze the one or more images for facial expression or head pose of the user, and dynamically animate a selected one of the plurality of software avatar keys based at least in part on a result of the analysis for facial expression or head pose of the user.

2. The apparatus of claim 1, wherein the keyboard module is to enter the avatar keyboard mode, and display the software avatar keyboard for use, in response to a user request for the software avatar keyboard.

3. The apparatus of claim 1, wherein the keyboard module is to further display or facilitate display of a current view of the camera in an area of the software avatar keyboard.

4. The apparatus of claim 1, wherein the apparatus further comprises the camera.

5. The apparatus of any one of claims 1-4, wherein the keyboard module is to input a dynamic animation of an avatar to the application, in response to a selection of a corresponding one of the plurality of software avatar keys.

6. The apparatus of claim 5, wherein the application is a communication application selected from a group consisting of a chat application, a messaging application, an email application or a social networking application.

7. The apparatus of claim 6, wherein the apparatus further comprises the communication application.

8. A method for communicating, comprising:

executing, by a computing device (100), an application (102);
receiving, by the computing device, a first user request for a software alphanumeric keyboard (112);
in response to the first user request, entering an alphanumeric keyboard mode, by the computing device, and displaying the software alphanumeric keyboard, having a plurality of alphanumeric keys, to facilitate selective input of alphanumeric characters corresponding to the alphanumeric keys, to the application;
receiving, by the computing device, a second user request for a software emoticon keyboard (114);
in response to the second user request, entering an emoticon keyboard mode, by the computing device, and displaying the software emoticon keyboard, having a plurality of emoticon keys to facilitate selective input of emoticons that are static images, corresponding to the emoticon keys to the application;
receiving, by the computing device, a third user request for a software avatar keyboard (116);
in response to the third user request, entering an avatar keyboard mode, by the computing device, and displaying the software avatar keyboard having a plurality of software avatar keys to facilitate selective input of dynamic animations of avatars, corresponding to the software avatar keys, to the application;
entering (168), by the computing device, a customize/animate mode within the avatar keyboard mode, and opening (170) a camera (108) to capture one or more images of a user of the computing device; and
analyzing (172), by the computing device, the one or more images for facial expression or head pose of the user, and dynamically animating (172) an avatar of a selected one of the plurality of software avatar keys based at least in part on a result of the analysis for facial expression or head pose of the user.

9. The method of claim 8, further comprising displaying or facilitate displaying, by the computing device, a current view of the camera in an area of the software avatar keyboard.

**Patentansprüche**

1. Kommunikationsvorrichtung (100) umfassend:

einen oder mehrere Prozessoren zum Ausführen einer Anwendung (102);
eine Avatar-Animations-Engine (106); und
ein Tastaturmodul (104), das mit dem einen oder den mehreren Prozessoren gekoppelt ist, um eine Mehrzahl von Tastaturen (112-116) in einer entsprechenden Mehrzahl von Tastaturmodi zur Eingabe in die Anwendung bereitzustellen, umfassend die Bereitstellung von:

einer alphanumerischen Softwaretastatur (112) in einem alphanumerischen Tastaturmodus mit einer Mehrzahl von alphanumerischen Tasten zum Ermöglichen selektiver Eingabe von alphanumerischen Zeichen, die alphanumerischen Tasten entsprechen, in die Anwendung;
einer Emoticon-Softwaretastatur (114) in einem Emoticon-Tastaturmodus mit einer Mehrzahl von Emoticon-Tasten zum Ermöglichen selektiver Eingabe von Emoticons, wobei es sich um statische Bilder handelt, die den Emoticon-Tasten entsprechen, in die Anwendung; und
einer Avatar-Softwaretastatur (116) in einem Avatar-Tastaturmodus mit einer Mehrzahl von Avatar-Softwaretasten zum Ermöglichen selektiver Eingabe von dynamischen Animationen einer Mehrzahl von Avataren, die den Avatar-Softwaretasten entsprechen, in die Anwendung, wobei:

das Tastaturmodul ferner zum Eingeben (168) eines Anpassungs-/Animationsmodus innerhalb des Avatar-Tastaturmodus und Öffnen (170) einer Kamera (108) zum Aufnehmen eines oder mehrerer Bilder eines Benutzers der Vorrichtung ist; und das Tastaturmodul ferner zum Bereitstellen (172) oder Veranlassen der Bereitstellung des einen oder der mehreren Bilder für die Avatar-Animations-Engine (106) zum Analysieren des einen oder der mehreren Bilder hinsichtlich Gesichtsausdruck oder Kopfhaltung des Benutzers und dynamischen Animieren einer ausgewählten der Mehrzahl von Avatar-Softwaretasten wenigstens zum Teil basierend auf einem Ergebnis der Analyse hinsichtlich Gesichtsausdruck oder Kopfhaltung des Benutzers ist.

2. Vorrichtung nach Anspruch 1, wobei das Tastaturmodul zum Eingeben des Avatar-Tastaturmodus und Anzeigen der Avatar-Softwaretastatur zur Verwendung in Reaktion auf eine Benutzeranforderung für die Avatar-Softwaretastatur ist.

3. Vorrichtung nach Anspruch 1, wobei das Tastaturmodul ferner zum Anzeigen oder Ermöglichen der Anzeige einer aktuellen Ansicht der Kamera in einem Bereich des Avatar-Softwaretastatur ist.

4. Vorrichtung nach Anspruch 1, wobei die Vorrichtung ferner die Kamera umfasst.

5. Vorrichtung nach einem der Ansprüche 1 bis 4, wobei das Tastaturmodul zum Eingeben einer dynamischen Animation eines Avatars in die Anwendung in Reaktion auf eine Auswahl einer entsprechenden der Mehrzahl von Avatar-Softwaretasten ist.

6. Vorrichtung nach Anspruch 5, wobei die Anwendung eine Kommunikationsanwendung ist, die aus einer Gruppe bestehend aus einer Chat-Anwendung, eine Nachrichtenübermittlungsanwendung, einer E-Mail-Anwendung oder einer Social-Networking-Anwendung ausgewählt ist.

7. Vorrichtung nach Anspruch 6, wobei die Vorrichtung ferner die Kommunikationsanwendung umfasst.

8. Kommunikationsverfahren, umfassend:

Ausführen einer Anwendung (102) durch eine Computervorrichtung (100);
Empfangen einer ersten Benutzeranforderung für eine alphanumerischen Softwaretastatur (112) durch die Computervorrichtung;
Eingeben eines alphanumerischen Tastaturmodus durch die Computervorrichtung in Reaktion auf die erste Benutzeranforderung und Anzeigen der alphanumerischen Softwaretastatur mit einer Mehrzahl von alphanumerischen Tasten zum Ermöglichen selektiver Eingabe von alphanumerischen Zeichen, die den alphanumerischen Tasten entsprechen, in die Anwendung;
Empfangen einer zweiten Benutzeranforderung für eine Emoticon-Softwaretastatur (114) durch die Computervorrichtung;
Eingeben eines Emoticon-Tastaturmodus durch die Computervorrichtung in Reaktion auf die zweite Benutzeranforderung und Anzeigen der Emoticon-Softwaretastatur mit einer Mehrzahl von Emoticon-Tasten zum Ermöglichen selektiver Eingabe von Emoticons, wobei es sich um statische Bilder handelt, die den Emoticon-Tasten entsprechen, in die Anwendung;
Empfangen einer dritten Benutzeranforderung für eine Avatar-Softwaretastatur (116) durch die Computervorrichtung;
Eingeben eines Avatar-Tastaturmodus durch die Computervorrichtung in Reaktion auf die dritte Benutzeranforderung und Anzeigen der Avatar-Softwaretastatur mit einer Mehrzahl von Avatar-Softwaretasten zum Ermöglichen selektiver Eingabe von dynamischen Animationen von Avataren, die den Avatar-Softwaretasten entsprechen, in die Anwendung;
Eingeben (168) eines Anpassungs-/Animationsmodus durch die Computervorrichtung innerhalb des Avatar-Tastaturmodus und Öffnen (170) einer Kamera (108) zum Aufnehmen eines oder mehrerer Bilder eines Benutzers der Computervorrichtung; und
Analysieren (172) des einen oder der mehreren Bilder durch die Computervorrichtung hinsichtlich Gesichtsausdruck oder Kopfhaltung des Benutzers und dynamisches Animieren (172) eines Avatars einer ausgewählten der Mehrzahl von Avatar-Softwaretasten wenigstens zum Teil basierend auf einem Ergebnis der Analyse hinsichtlich Gesichtsausdruck oder Kopfhaltung des Benutzers.

9. Verfahren nach Anspruch 8, ferner umfassend ein Anzeigen oder Ermöglichen der Anzeige einer aktuellen Ansicht der Kamera in einem Bereich der Avatar-Softwaretastatur durch die Computervorrichtung.

**Revendications**

1. Appareil de communication (100), comprenant :

un ou plusieurs processeurs servant à exécuter une application (102) ;

un moteur d'animation d'avatars (106) ; et
un module claviers (104) couplé aux un ou plusieurs processeurs pour fournir une pluralité de claviers (112-116) dans une pluralité correspondante de modes claviers permettant la saisie dans l'application, comportant la fourniture de :

un clavier alphanumérique logiciel (112), dans un mode clavier alphanumérique, pourvu d'une pluralité de touches alphanumériques pour faciliter la saisie sélective de caractères alphanumériques, correspondant à des touches alphanumériques, dans l'application ;
un clavier d'émoticons logiciel (114), dans un mode clavier d'émoticons, pourvu d'une pluralité de touches d'émoticons pour faciliter la saisie sélective d'émoticons consistant en des images statiques, correspondant aux touches d'émoticons, dans l'application ; et
un clavier d'avatars logiciel (116), dans un mode clavier d'avatars, pourvu d'une pluralité de touches d'avatars logicielles pour faciliter la saisie sélective d'animations dynamiques d'une pluralité d'avatars, correspondant aux touches d'avatars logicielles, dans l'application,

le module claviers servant en outre à passer (168) dans un mode personnaliser/animer au sein du mode clavier d'avatars, et ouvrir (170) une caméra (108) afin de capturer une ou plusieurs images d'un utilisateur de l'appareil ; et le module claviers servant à en outre fournir (172), ou faire fournir, les une ou plusieurs images au moteur d'animation d'avatars (106) afin d'analyser les une ou plusieurs images à la recherche d'une expression faciale ou d'une pose de la tête de l'utilisateur et d'animer dynamiquement une touche d'avatar logicielle sélectionnée parmi la pluralité de touches d'avatars logicielles sur la base au moins en partie d'un résultat de l'analyse à la recherche d'une expression faciale ou d'une poste de la tête de l'utilisateur.

2. Appareil selon la revendication 1, dans lequel le module claviers sert à passer dans le mode clavier d'avatars et afficher le clavier d'avatars logiciel en vue de son utilisation, en réponse à une requête du clavier d'avatars logiciel émanant de l'utilisateur.

3. Appareil selon la revendication 1, dans lequel le module claviers sert en outre à afficher ou à faciliter l'affichage d'une vue actuelle de la caméra dans une zone du clavier d'avatars logiciel.

4. Appareil selon la revendication 1, lequel appareil comprend en outre la caméra.

5. Appareil selon l'une quelconque des revendications 1 à 4, dans lequel le module claviers sert à saisir une animation dynamique d'un avatar dans l'application, en réponse à une sélection d'une touche d'avatar logicielle correspondante parmi la pluralité de touches d'avatars logicielles.

6. Appareil selon la revendication 5, dans lequel l'application est une application de communication sélectionnée dans un groupe constitué par une application de chat, une application de messagerie, une application de courrier électronique ou une application de réseau social.

7. Appareil selon la revendications 6, lequel appareil comprend en outre l'application de communication.

8. Procédé de communication, comprenant :

l'exécution, par un dispositif informatique (100), d'une application (102) ;
la réception, par le dispositif informatique, d'une première requête d'un clavier alphanumérique logiciel (112) émanant d'un utilisateur ;
en réponse à la première requête émanant de l'utilisateur, le passage dans un mode clavier alphanumérique, par le dispositif informatique, et l'affichage d'un clavier alphanumérique logiciel, pourvu d'une pluralité de touches alphanumériques, pour faciliter la saisie sélective de caractères alphanumériques, correspondant aux touches alphanumériques, dans l'application ;
la réception, par le dispositif informatique, d'une deuxième requête d'un clavier d'émoticons logiciel (114) émanant de l'utilisateur ;
en réponse à la deuxième requête émanant de l'utilisateur, le passage dans un mode clavier d'émoticons, par le dispositif informatique, et l'affichage du clavier d'émoticons logiciel, pourvu d'une pluralité de touches d'émoticons, pour faciliter la saisie sélective d'émoticons consistant en des images statiques, correspondant aux touches d'émoticons, dans l'application ;
la réception, par le dispositif informatique, d'une troisième requête d'un clavier d'avatars logiciel (116) émanant de l'utilisateur ;
en réponse à la troisième requête émanant de l'utilisateur, le passage dans un mode clavier d'avatars, par le dispositif informatique, et l'affichage du clavier d'avatars logiciel, pourvu d'une pluralité de touches d'avatars logicielles, pour faciliter la saisie sélective d'animations dynamiques d'avatars, correspondant aux touches d'avatars logicielles, dans l'application,
le passage (168), par le dispositif informatique, dans un mode personnaliser/animer au sein du mode clavier d'avatars, et l'ouverture (170) d'une caméra (108) afin de capturer une ou plusieurs images d'un utilisateur du dispositif informatique ; et

l'analyse (172), par le dispositif informatique, des une ou plusieurs images à la recherche d'une expression faciale ou d'une pose de la tête de l'utilisateur, et l'animation dynamique (172) d'un avatar d'une touche d'avatar logicielle sélectionnée parmi la pluralité de touches d'avatars logicielles sur la base au moins en partie d'un résultat de l'analyse à la recherche d'une expression faciale ou d'une poste de la tête de l'utilisateur.

9. Procédé selon la revendication 8, comprenant en outre l'affichage ou la facilitation de l'affichage, par le dispositif informatique, d'une vue actuelle de la caméra dans une zone du clavier d'avatars logiciel.

**Figure 1**

EP 3 281 086 B1

**Figure 2**

Figure 3

Figure 4

EP 3 281 086 B1

**Figure 5**

Figure 7

_160_

On Entry into Avatar Keyboard Mode

Display Avatar Keys _162_

Commands? _164_

No

Switch Keyboard

Scroll → Scroll Avatars _166_

Customize/Animate → Enter Customize/Animate Mode 168 → Open Device Camera 170 → Operate AAE to Customize/Animate Selected Avatar _172_

Select → Input to Application _174_

Other → Process Command _176_

Figure 6

_150_

Start

Display Keyboard _152_

Operate in Corresponding Keyboard Operation Mode _154_

Continue

106

```
┌─────────────────────┐                    ┌─────────────────────┐
│  Facial Expression  │                    │                     │
│  Tracker/Analyzer   │───────────────────▶│   Animator 184      │
│        182          │                    │                     │
└─────────────────────┘    Animation       └─────────────────────┘
                           Messages
                           ~ 186
```

**Figure 8**

19

```
┌──────────┐      ┌──────────┐      ┌─────────────────────────────┐
│ Face     │      │ Landmark │      │ Initial Face Mesh Fitting 206│
│ Detection│─────▶│ Detection│─────▶│                             │
│ 202      │      │ 204      │──┐   └─────────────────────────────┘
└──────────┘      └──────────┘  │   ┌─────────────────────────────┐
     ▲                          └──▶│ Facial Expression Estimation 208│
Not Validated                       └─────────────────────────────┘

                                    ┌─────────────────────────────┐
┌──────────┐   ┌──────────┐         │ Head Pose Tracking 210      │
│ Tracking │   │ Facial   │         └─────────────────────────────┘
│ Validation│◀─│ Mesh     │◀────────
│ 216      │   │ Tracking │         ┌─────────────────────────────┐
└──────────┘   │ 214      │         │ Mouth Openness Estimation 212│
     │         └──────────┘         └─────────────────────────────┘
Validated

┌──────────────┐   ┌──────────────┐
│ Eye Blink    │   │ Facial Mesh  │
│ Detection &  │──▶│ Adaptation 220│            182
│ Mouth        │   │              │
│ Correction 218│  └──────────────┘
└──────────────┘
```

**Figure 9**

Figure 10

Non-transitory computer-readable storage medium
602

Programming Instructions 604
configured to cause a device, in response to execution of the
programming instructions, to practice (aspects of)
embodiments of the process of Figures 1-9.

**Figure 11**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014178044 A1
- US 2008158230 A1
- US 2015035825 A1
- US 2016259548 A1
- US 2014082520 A1